# EUROPEAN PATENT APPLICATION

(11) **EP 1 376 901 A2**
(43) Date of publication of application: **02.01.2004**
(21) Application number: 03014366.3
(22) Date of filing: 26.06.2003
(51) Int. Cl.: H04B 10/152, H04B 10/08

(54) **Station side apparatus, subscriber side apparatus and optically communicating system**

(30) Priority: 27.06.2002 JP 2002187324
(71) Applicant: MATSUSHITA ELECTRIC INDUSTRIAL CO., LTD., Kadoma-shi, Osaka 571-8501 (JP)
(72) Inventor: Uno, Hitoshi, Yokohama-shi, Kanagawa 222-0031 (JP)
(74) Representative: Casalonga, Axel

(57) **Abstract**

This subject is to reduce a variation width in an optical output power even if the number of photodiodes for monitoring an optical output power of a station side apparatus is reduced.

A subscriber side apparatus 200 detects a power level of a downward light input signal from a station side apparatus 100, and transmits a control information corresponding to that detection value to the station side apparatus. The station side apparatus controls a power level of a downward light output signal on the basis of the control information.

## Description

### BACKGROUND OF THE INVENTION

### 1. Field of the Invention

The present invention relates to an optically communicating system for carrying out an optical communication in two ways between a station side apparatus and a subscriber side apparatus.

### 2. Description of the Related Art

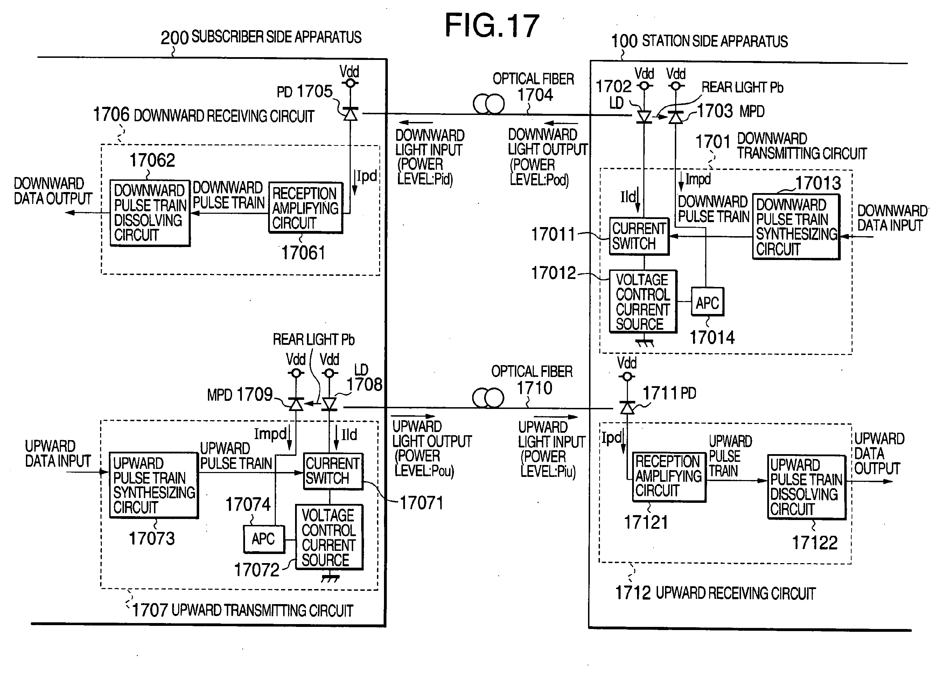

Fig. 17 shows a conventional and optically communicating system. In Fig. 17, a downward data to a subscriber side apparatus 200 from a station side apparatus 100 is transmitted by using an optical fiber 1704 as a medium, and an upward data to the station side apparatus 100 from the subscriber side apparatus 200 is transmitted by using an optical fiber 1710 as a medium.

A downward optical signal including the downward data transmitted from the station side apparatus 100 is transmitted since a downward transmitting circuit 1701 sends a pulse driving current Ild to an LD 1702. The pulse driving current Ild is generated since a current switch 17011 switches a route, through which a current flowing into a voltage control current source 17012 flows, in accordance with a level = 1 or 0 of a downward pulse train. The downward pulse train includes the downward data, and it is generated by a downward pulse train synthesizing circuit 17013.

An MPD (Monitoring Photo Diode) 1703 receives a rear light Pb of the LD 1702. Then, a monitoring current Impd obtained by an optic-electric conversion is inputted to an automatic power control (APC) circuit (merely indicated as APC in Fig. 17) 17014. The APC circuit 17014 adjusts a control voltage of the voltage control current source 17012 so that the monitoring current Impd is constant. Thus, a downward light output power level Pod is kept substantially constant, and a downward light input power level Pid inputted to the subscriber side apparatus 200 falls in a constant range.

After the downward optical signal including the downward data of the LD 1702 is passed through the optical fiber 1704, it is inputted to the subscriber side apparatus 200. Then, a PD 1705 performs the optic-electric conversion on it, and an optical current Ipd after the conversion is inputted to a downward receiving circuit 1706. The optical current Ipd is converted into a digital voltage signal by a reception amplifying circuit 17061, and the downward pulse train is reproduced. A downward pulse train dissolving circuit 17062 extracts and outputs only the downward data from the reproduced downward pulse train.

As for an upward direction, an upward data is transmitted perfectly identical to the downward direction.

However, in the conventional and optically communicating system, both of the station side apparatus 100 and the subscriber side apparatus 200 require the MPDs 1703, 1709 in order to keep the optical output substantially constant. Thus, this conventional system has a problem that it is difficult to attain a light module at a small size and a low cost.

The present invention is proposed in order to solve the conventional problems. Therefore, an object of the present invention is to provide an optically communicating system, a station side apparatus and a subscriber side apparatus, which can decrease a variation width in an optical output power in the station side apparatus even if the number of monitoring photodiodes in the station side apparatus is reduced.

### SUMMARY OF THE INVENTION

In order to solve the above-mentioned object, the present invention is a subscriber side apparatus in an optically communicating system for carrying out an optical communication in two ways between a station side apparatus and the subscriber side apparatus, characterized by including:
a unit for detecting a power level of a downward light input signal from the station side apparatus; and
a unit for transmitting a control information corresponding to that detection value to the station side apparatus.

Due to the above-mentioned configuration, even if the number of the monitoring photodiodes in the station side apparatus is reduced, the optical input power of the subscriber side apparatus can fall in the constant range.

The present invention is also characterized in that the subscriber side apparatus noted in claim 1 transmits the detection value of the power level in the downward light input signal to the station side apparatus for each constant time interval.

Due to the above-mentioned configuration, even if the number of the monitoring photodiodes in the station side apparatus is reduced, the optical input power of the subscriber side apparatus can fall in the constant range.

The present invention is also characterized in that the subscriber side apparatus noted in claim 1 judges whether or not the detection value of the power level in the downward light input signal is within a predetermined range, and only if it is outside the predetermined range, transmits that fact to the station side apparatus.

Due to the above-mentioned configuration, even if the number of the monitoring photodiodes in the station side apparatus is reduced, the optical input power of the subscriber side apparatus can fall in the constant range. Moreover, it is possible to reduce the influence on the maximum transferring ability in the upward direction.

The present invention is also characterized in that the subscriber side apparatus noted in claim 1 judges whether or not the detection value of the power level in the downward light input signal is within the predetermined range, and if a plurality of judged results are continuously outside the predetermined range, transmits that fact to the station side apparatus.

Due to the above-mentioned configuration, even if the number of the monitoring photodiodes in the station side apparatus is reduced, the optical input power of the subscriber side apparatus can fall in the constant range. Also, even if the optical output of the station side apparatus is turned off, it is possible to control the optical output power of the station side apparatus without receiving that influence.

The present invention is also characterized in that the subscriber side apparatus noted in claim 3 or 4, if a next judged result after a transmission of a standard range violation report is outside the predetermined range, transmits that fact to the station side apparatus.

Due to the above-mentioned configuration, after the power level of the downward light output signal is switched in accordance with a first standard range violation report, if it becomes outside the standard range, the station side apparatus can output an alarm to thereby judge the trouble on the downward light transmitting path.

The present invention is a station side apparatus in an optically communicating system for carrying out an optical communication in two ways between the station side apparatus and a subscriber side apparatus, wherein the subscriber side apparatus detects a power level of a downward light input signal from the station side apparatus and transmits a control information corresponding to that detection value to the station side apparatus,
characterized by including a unit for controlling a power level of a downward light output signal to the subscriber side apparatus in accordance with the control information.

Due to the above-mentioned configuration, even if the number of the monitoring photodiodes in the station side apparatus is reduced, the optical input power of the subscriber side apparatus can fall in the constant range.

The present invention is also characterized in that in the station side apparatus noted in claim 6, the control information is the detection value of the power level in the downward light input signal, and whether or not the detection value is within a predetermined range is judged, and if it is outside the predetermined range, the power level of the downward light output signal is switched.

Due to the above-mentioned configuration, even if the number of the monitoring photodiodes in the station side apparatus is reduced, the optical input power of the subscriber side apparatus can fall in the constant range.

The present invention is also characterized in that in the station side apparatus noted in claim 6, if the control information is a standard violation report indicating that the detection value of the power level of the downward light input signal is outside the predetermined range, and if the standard violation report is received, the power level of the downward light output signal is switched.

Due to the above-mentioned configuration, even if the number of the monitoring photodiodes in the station side apparatus is reduced, the optical input power of the subscriber side apparatus can fall in the constant range. Moreover, it is possible to reduce the influence on the maximum transferring ability in the upward direction.

The present invention is also characterized in that in the station side apparatus noted in claim 6, if the control information is the standard violation report indicating that the detection value of the power level of the downward light input signal is outside the predetermined range, and if a plurality of detection values are continuously outside the predetermined range, an output power level of the downward light output signal is switched.

Due to the above-mentioned configuration, even if the number of the monitoring photodiodes in the station side apparatus is reduced, the optical input power of the subscriber side apparatus can fall in the constant range. Moreover, even if the optical output of the station side apparatus is turned off, it is possible to control the optical output power of the station side apparatus without receiving the influence.

The present invention is also characterized in that the station side apparatus noted in claim 8 or 9 outputs an alarm, if a next judged result after the power level of the downward light output signal is switched becomes outside the predetermined range.

Due to the above-mentioned configuration, even if the number of the monitoring photodiodes in the station side apparatus is reduced, the optical input power of the subscriber side apparatus can fall in the constant range. Moreover, the station side apparatus can judge the trouble on the downward light transmitting path.

The present invention is a station side apparatus in an optically communicating system for carrying out an optical communication in two ways between the station side apparatus and a subscriber side apparatus, characterized in that a power level of a downward light output signal to the subscriber side apparatus is controlled on the basis of a power level of an upward light output signal from the subscriber side apparatus.

Due to the above-mentioned configuration, even if the number of the monitoring photodiodes in the station side apparatus is reduced, the optical input power of the subscriber side apparatus can fall in the constant range.

The present invention is also characterized in that the station side apparatus noted in claim 11 switches the power level of the downward light output signal to the subscriber side apparatus in stages in accordance with a hysteresis property.

Due to the above-mentioned configuration, even if the number of the monitoring photodiodes in the station side apparatus is reduced, the optical input power of the subscriber side apparatus can fall in the constant range. Moreover, it is possible to protect the power level of the downward light output signal to the subscriber side apparatus from being frequently changed.

The present invention is also characterized in that the station side apparatus noted in one of the preceding claims 6 to 12, after switching the power level of the downward light output signal to the subscriber side apparatus, inserts a dummy data into a downward data.

Due to the above-mentioned configuration, it is possible to protect the downward signal from being erroneous when the power level of the downward light output signal is switched.

The present invention is also characterized in that the station side apparatus noted in one of the preceding claims 6 to 13 gradually changes the power level of the downward light output signal to the subscriber side apparatus.

Due to the above-mentioned configuration, when the power level of the downward light output signal is changed, it is possible to protect the downward signal from being erroneous. Moreover, it is possible to protect the transient drop in the transmission capacity of the downward signal.

The present invention is also characterized in that in the station side apparatus noted in one of the preceding claims 6 to 13, the downward light output signal to the subscriber side apparatus is a burst signal, and the power level of the downward light output signal is switched between the burst signals, and a preamble signal is added to a lead of the burst signal.

Due to the above-mentioned configuration, when the power level of the downward light output signal is changed, it is possible to protect the downward signal from being erroneous.

In order to attain the above-mentioned object, the present invention is an optically communicating system for carrying out an optical communication in two ways between a station side apparatus and a subscriber side apparatus,
wherein the subscriber side apparatus detects a power level of a downward light input signal from the station side apparatus and transmits a control information corresponding to that detection value to the station side apparatus, and
the station side apparatus controls a power level of a downward light output signal to the subscriber side apparatus in accordance with the control information.

Due to the above-mentioned configuration, even if the number of the monitoring photodiodes in the station side apparatus is reduced, the optical input power of the subscriber side apparatus can fall in the constant range.

The present invention is also characterized in that in the optically communicating system noted in claim 16, the subscriber side apparatus transmits the detection value of the power level of the downward light input signal to the station side apparatus for each constant time interval, and
the station side apparatus judges whether or not the detection value is within a predetermined range, and switches the power level of the downward light output signal if it is outside the predetermined range.

Due to the above-mentioned configuration, even if the number of the monitoring photodiodes in the station side apparatus is reduced, the optical input power of the subscriber side apparatus can fall in the constant range.

The present invention is also characterized in that in the optically communicating system noted in claim 16, the subscriber side apparatus judges whether or not the detection value of the power level of the downward light input signal is within the predetermined range, and only if it is outside the predetermined range, transmits that fact to the station side apparatus, and
the station side apparatus, if receiving the standard violation report, switches the power level of the downward light output signal.

Due to the above-mentioned configuration, even if the number of the monitoring photodiodes in the station side apparatus is reduced, the optical input power of the subscriber side apparatus can fall in the constant range. Moreover, it is possible to reduce the influence on the maximum transferring ability in the upward direction.

The present invention is also characterized in that in the optically communicating system noted in claim 16, the subscriber side apparatus transmits the detection value of the power level of the downward light input signal for each constant time interval, and
the station side apparatus judges whether or not the detection value is within the predetermined range, and if a plurality of judged results are continuously outside the predetermined range, switches an output power level of the downward light output signal.

Due to the above-mentioned configuration, even if the number of the monitoring photodiodes in the station side apparatus is reduced, the optical input power of the subscriber side apparatus can fall in the constant range. Moreover, even if the optical output of the station side apparatus is turned off, it is possible to control the optical output power of the station side apparatus without receiving the influence.

The present invention is also characterized in that in the optically communicating system noted in claim 16, the subscriber side apparatus judges whether or not the detection value of the power level of the downward light input signal is within the predetermined range, and if a plurality of judged results are continuously outside the predetermined range, transmits that fact to the station side apparatus, and
the station side apparatus, if receiving the standard violation report, switches the power level of the downward light output signal.

Due to the above-mentioned configuration, even if the number of the monitoring photodiodes in the station side apparatus is reduced, it is possible to reduce the variation width in the optical output power of the station side apparatus. Moreover, even if the optical output of the subscriber side apparatus is turned off, it is possible to control the optical output power of the station side apparatus.

The present invention is also characterized in that in the optically communicating system noted in one of the preceding claims 16 to 20, the station side apparatus outputs an alarm, if a next judged result after the power level of the downward light output signal is changed becomes outside the predetermined range.

Due to the above-mentioned configuration, even if the number of the monitoring photodiodes in the station side apparatus is reduced, it is possible to reduce the variation width in the optical output power of the station side apparatus. Moreover, the side of the station side apparatus can judge the trouble on the downward light transmitting path.

The present invention is also characterized in that an optically communicating system for carrying out an optical communication in two ways between a station side apparatus and a subscriber side apparatus, wherein the station side apparatus controls a power level of a downward light output signal to the subscriber side apparatus on the basis of a power level of an upward light output signal from the subscriber side apparatus.

Due to the above-mentioned configuration, even if the number of the monitoring photodiodes in the station side apparatus is reduced, it is possible to reduce the variation width in the optical output power of the station side apparatus.

The present invention is also characterized in that in the optically communicating system noted in claim 22, the station side apparatus switches the power level of the downward light output signal to the subscriber side apparatus in stages in accordance with a hysteresis property.

Due to the above-mentioned configuration, even if the number of the monitoring photodiodes in the station side apparatus is reduced, it is possible to reduce the variation width in the optical output power of the station side apparatus. Moreover, it is possible to protect the power level of the downward light output signal to the subscriber side apparatus from being frequently changed.

The present invention is also characterized in that in the optically communicating system noted in one of the preceding claims 16 to 23, the station side apparatus, after switching the power level of the downward light output signal to the subscriber side apparatus, inserts a dummy data into a downward data.

Due to the above-mentioned configuration, when the power level of the downward light output signal is switched, it is possible to protect the downward signal from being erroneous.

The present invention is also characterized in that in the optically communicating system noted in one of the preceding claims 16 to 23, the station side apparatus gradually changes the power level of the downward light output signal to the subscriber side apparatus.

Due to the above-mentioned configuration, when the power level of the downward light output signal is switched, it is possible to protect the downward signal from being erroneous. Moreover, it is possible to protect the transient drop in the transmission capacity of the downward signal.

The present invention is also characterized in that in the optically communicating system noted in one of the preceding claims 16 to 23, the downward light output signal to the subscriber side apparatus is a burst signal, and the station side apparatus switches the power level of the downward light output signal between the burst signals and adds a preamble signal to a lead of the burst signal.

Due to the above-mentioned configuration, when the power level of the downward light output signal is switched, it is possible to protect the downward signal from being erroneous.

### BRIEF DESCRIPTION OF THE DRAWINGS

These and other objects and features will become more readily apparent from the following detailed description taken in conjunction with the accompanying drawings in which:
Fig. 1 is a block diagram showing an optically communicating system in first to fourth embodiments of the present invention;
Fig. 2 is a view explaining an operation of the optically communicating system in the first embodiment of the present invention;
Fig. 3 is a view explaining an operation of the optically communicating system in the second embodiment of the present invention;
Fig. 4 is a view explaining an operation of the optically communicating system in the third embodiment of the present invention;
Fig. 5 is a view explaining an operation of the optically communicating system in the fourth embodiment of the present invention;
Fig. 6 is a block diagram showing an optically communicating system in fifth and sixth embodiments of the present invention;
Fig. 7 is a view explaining an operation of the optically communicating system in the fifth embodiment of the present invention;
Fig. 8 is a view explaining an operation of the optically communicating system in the sixth embodiment of the present invention;
Fig. 9 is a block diagram showing an optically communicating system in a seventh embodiment of the present invention;
Fig. 10 is a block diagram showing an optically communicating system in an eighth embodiment of the present invention;
Fig. 11 is a block diagram showing an optically communicating system in a ninth embodiment of the present invention;
Fig. 12 is a block diagram showing an optically communicating system in a tenth embodiment of the present invention;
Fig. 13 is a view explaining an operation of an optically communicating system in an eleventh embodiment of the present invention;
Fig. 14 is a view explaining an operation of an optically communicating system in a fourteenth embodiment of the present invention;
Fig. 15 is a view explaining an operation of an optically communicating system in a fifteenth embodiment of the present invention;
Fig. 16 is a view explaining an operation of an optically communicating system in a sixteenth embodiment of the present invention;
Fig. 17 is a block diagram showing a conventional and optically communicating system; and
Fig. 18 is a block diagram showing a main portion of the conventional and optically communicating system.

### DETAILED DESCRIPTION OF ILLUSTRATIVE EMBODIMENTS

Embodiments according to the present invention will be described below with reference to the drawings.

### <First Embodiment>

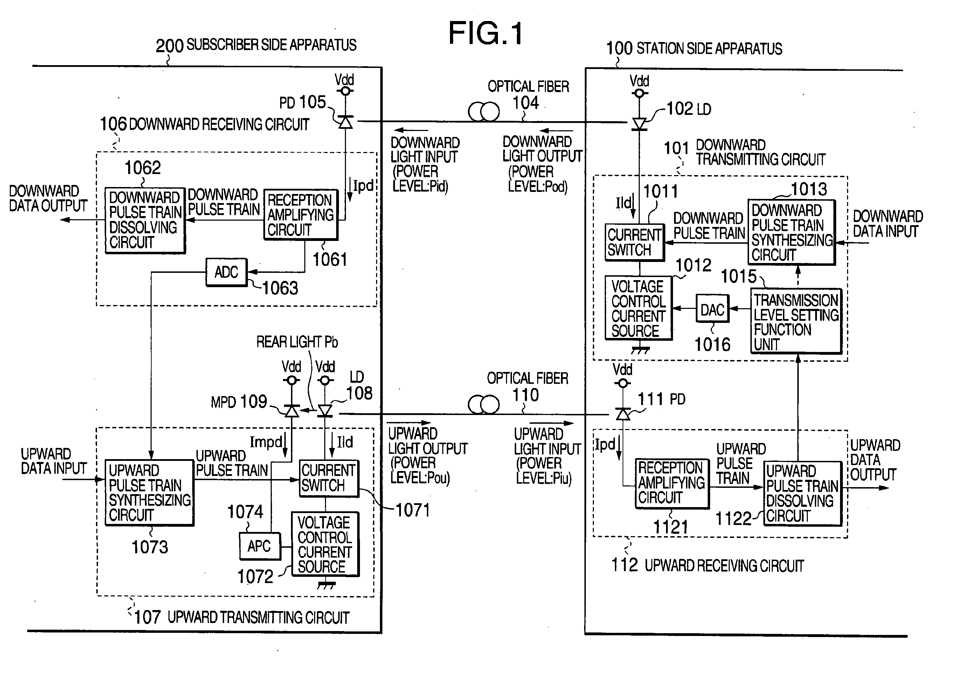

Fig. 1 shows a block diagram of an optically communicating system in first (and second to fourth) embodiments of the present invention. In Fig. 1, a downward data to a subscriber side apparatus 200 from a station side apparatus 100 is transmitted by using an optical fiber 104 as a medium, and an upward data to the station side apparatus 100 from the subscriber side apparatus 200 is transmitted by using an optical fiber 110 as a medium.

After the downward optical signal including the downward data is passed through the optical fiber 104, it is inputted to the subscriber side apparatus 200. Then, the PD 105 performs the optic-electric conversion on it, and an optical current Ipd after the conversion is inputted to a downward receiving circuit 106. The downward receiving circuit 106 converts the optical current Ipd into a digital voltage signal, and further extracts and outputs only the downward data, and also detects a downward input power level, and then converts the detected result into a digital data and outputs. The downward receiving circuit 106 has a reception amplifying circuit 1061, a downward pulse train dissolving circuit 1062 and an analog-to-digital converting circuit (ADC) 1063. The reception amplifying circuit 1061 converts the optical current Ipd into a digital voltage signal, and the downward pulse train is reproduced. The downward pulse train dissolving circuit 1062 extracts and outputs only the downward data from the downward pulse train. Also, the reception amplifying circuit 1061 detects the downward light input power level, and the detected result is converted into a digital data by the ADC 1063 and outputted to an upward transmitting circuit 107.

The upward optical signal including the upward data transmitted from the subscriber side apparatus 200 is transmitted since the upward transmitting circuit 107 sends a pulse driving current Ild to an LD 108. The pulse driving current Ild is generated since a current switch 1701 switches a route, through which a current flowing into a voltage control current source 1072 flows, in accordance with a level = 1 or 0 of an upward pulse train. The upward pulse train includes the information with regard to the downward light input power level inputted from the downward receiving circuit 106 and the upward data, and it is generated by an upward pulse train synthesizing circuit 1073. An MPD 109 receives a rear light Pb of the LD 108. Then, a monitoring current Impd obtained by the optic-electric conversion is inputted to an automatic power control (APC) circuit 1074. The APC circuit 1074 adjusts a control voltage of the voltage control current source 1072 so that the monitoring current Impd is constant. Thus, an upward light output power level Pou is kept substantially constant.

After the upward optical signal including the upward data is passed through the optical fiber 110, it is inputted to the station side apparatus 100. Then, a PD 111 performs the optic-electric conversion on it. The optical current Ipd after the conversion is inputted to an upward receiving circuit 112. The upward receiving circuit 112 converts the optical current Ipd into a digital voltage signal, and further extracts and outputs the downward data. The upward receiving circuit 112 has a reception amplifying circuit 1121 and an upward pulse train dissolving circuit 1122. The reception amplifying circuit 1121 converts the optical current Ipd into a digital voltage signal, and the upward pulse train is reproduced. The upward pulse train dissolving circuit 1122 extracts and outputs the upward data from the upward pulse train, and also extracts the information with regard to the downward light input power level.

The downward optical signal including the downward data transmitted from the station side apparatus 100 is transmitted since a downward transmitting circuit 101 sends the pulse driving current Ild to an LD 102. The pulse driving current Ild is generated since a current switch 1011 switches a route, through which a current flowing into a voltage control current source 1012 flows, in accordance with a level = 1 or 0 of a downward pulse train. The downward pulse train includes the downward data, and it is generated by a downward pulse train synthesizing circuit 1013. A control voltage of the voltage control current source 1012 is provided such that on the basis of the information with regard to the downward light input power level inputted from the upward receiving circuit 112, a setting value is determined by a transmission level setting function unit 1015 and converted into a voltage by a digital-to-analog converting circuit (DAC) 1016.

By the way, a signal line is connected from the transmission level setting function unit 1015 to the downward pulse train synthesizing circuit 1013. This is required in a fourteenth embodiment of the present invention, which will be described later.

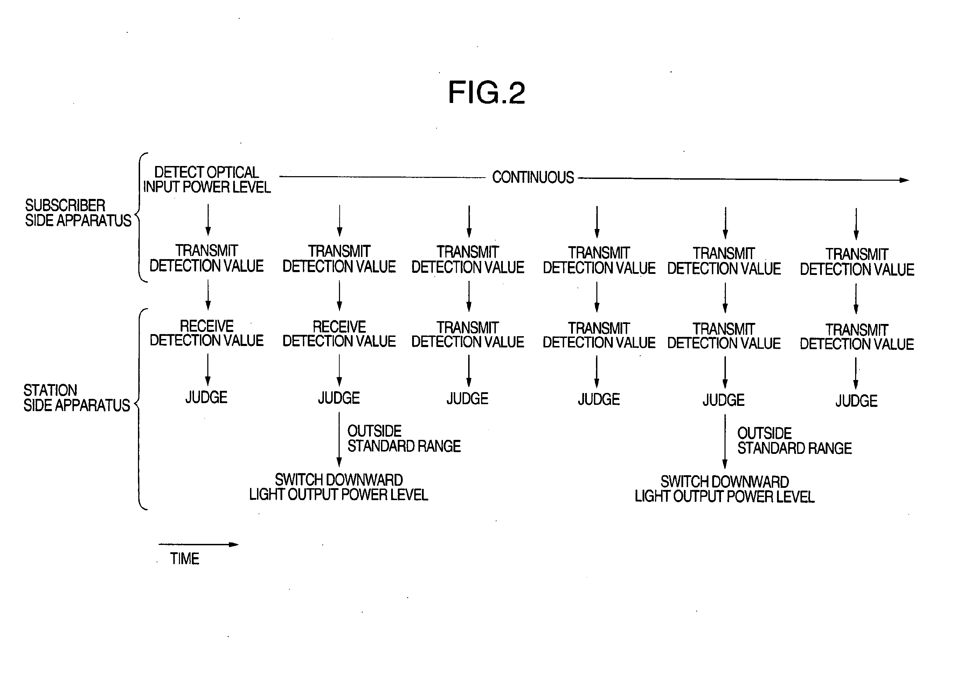

The operation is explained for the optically communicating system having the above-mentioned configuration. Fig. 2 is a view explaining the operation of the optically communicating system in the first embodiment of the present invention. In the subscriber side apparatus 200, the upward pulse train synthesizing circuit 1073 collects the detection values of the downward light input power levels for each constant time interval and transmits to the station side apparatus 100. In the station side apparatus 100, the upward pulse train pulse train dissolving circuit 1122 extracts the detection values of the downward light input power levels, and judges whether or not the detection value is within a predetermined range. If the detection value is outside the predetermined range, it reports that fact to the transmission level setting function unit 1015 and switches the downward light output power level.

According to the first embodiment of the present invention as mentioned above, the downward light output power level of the station side apparatus 100 is switched on the basis of the downward light input power level information in the input of the subscriber side apparatus 200. Thus, even if the number of the MPDs in the station side apparatus 100 is reduced, the optical input power of the subscriber side apparatus 200 can fall in the constant range.

### <Second Embodiment>

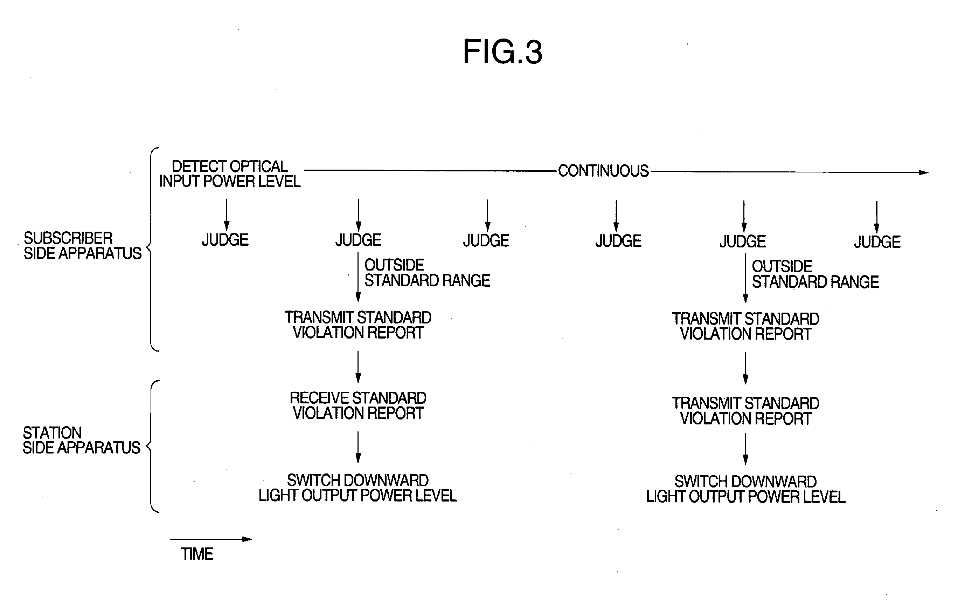

Fig. 3 is a view explaining the operation of the optically communicating system in the second embodiment of the present invention. In the subscriber side apparatus 200, the upward pulse train synthesizing circuit 1073 collects the detection values of the downward light input power levels for each constant time interval, and judges whether or not the detection value is within the predetermined range. Only if the detection value is outside the predetermined range, it transmits [Standard Violation Report] in an upward direction or a downward direction to the station side apparatus 100. In the station side apparatus 100, the upward pulse train dissolving circuit 1122 extracts [Standard Violation Report]. In the case of the extraction, it further reports that fact to the transmission level setting function unit 1015, and switches the downward light output power level.

According to the second embodiment of the present invention as mentioned above, the downward light output power level of the station side apparatus 100 is switched on the basis of the downward light input power level information in the input of the subscriber side apparatus 200. Thus, even if the number of the MPDs in the station side apparatus 100 is reduced, the optical input power of the subscriber side apparatus 200 can fall in the constant range. Moreover, the information amount with regard to the light input power level to be transmitted to the station side apparatus 100 is smaller than that of the first embodiment of the present invention. Hence, this has a merit that it is advantageous in the maximum transfer ability of the upward data.

### <Third Embodiment>

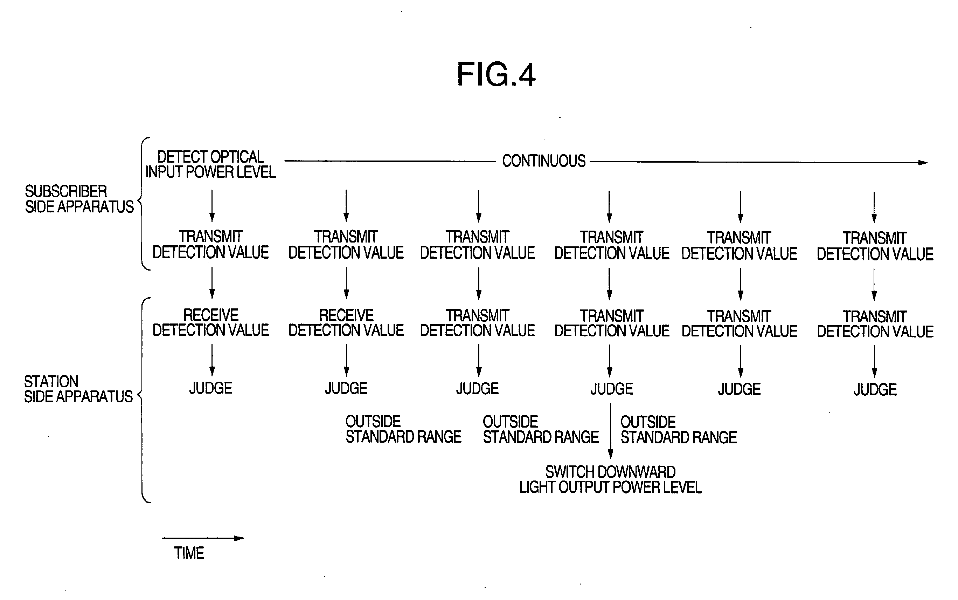

Fig. 4 is a view explaining the operation of the optically communicating system in the third embodiment of the present invention. The third embodiment is the improvement of the optically communicating system in the first embodiment. The upward pulse train pulse train dissolving circuit 1122 extracts the detection values of the downward light input power levels, and judges whether or not the detection value is within the predetermined range. If a plurality of judged results are continuously outside the predetermined range, it transmits to the transmission level setting function unit 1015, and switches the downward light output power level.

According to the third embodiment of the present invention as mentioned above, the downward light output power level of the station side apparatus 100 is switched on the basis of the downward light input power level information in the input of the subscriber side apparatus 200. Thus, even if the number of the MPDs in the station side apparatus 100 is reduced, the optical input power of the subscriber side apparatus 200 can fall in the constant range. Moreover, the downward light output power level is controlled on the basis of the plurality of judged results. Hence, it is possible to avoid the influence caused by the case in which the optical output of the station side apparatus 100 is turned off by any reason.

### <Fourth Embodiment>

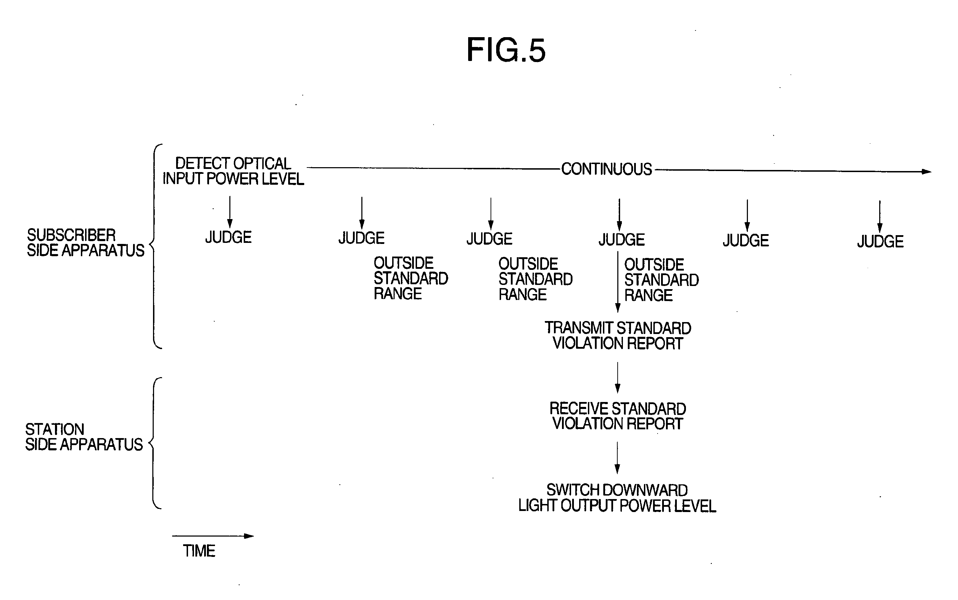

Fig. 5 is a view explaining the operation of the optically communicating system in the fourth embodiment of the present invention. The fourth embodiment is the improvement of the optically communicating system in the second embodiment. The upward pulse train synthesizing circuit 1073 collects the detection values of the downward light input power levels for each constant time interval, and judges whether or not the detection value is within the predetermined range. Only if a plurality of judged results are continuously outside the predetermined range, it transmits [Standard Violation Report] to the station side apparatus 100.

According to the fourth embodiment of the present invention as mentioned above, the downward light output power level of the station side apparatus 100 is switched on the basis of the downward light input power level information in the input of the subscriber side apparatus 200. Thus, even if the number of the MPDs in the station side apparatus 100 is reduced, the optical input power of the subscriber side apparatus 200 can fall in the constant range. Moreover, similarly to the third embodiment of the present invention, the downward light output power level is controlled on the basis of the plurality of judged results. Hence, it is possible to avoid the influence caused by the case in which the optical output of the station side apparatus 100 is turned off by any reason.

### <Fifth Embodiment>

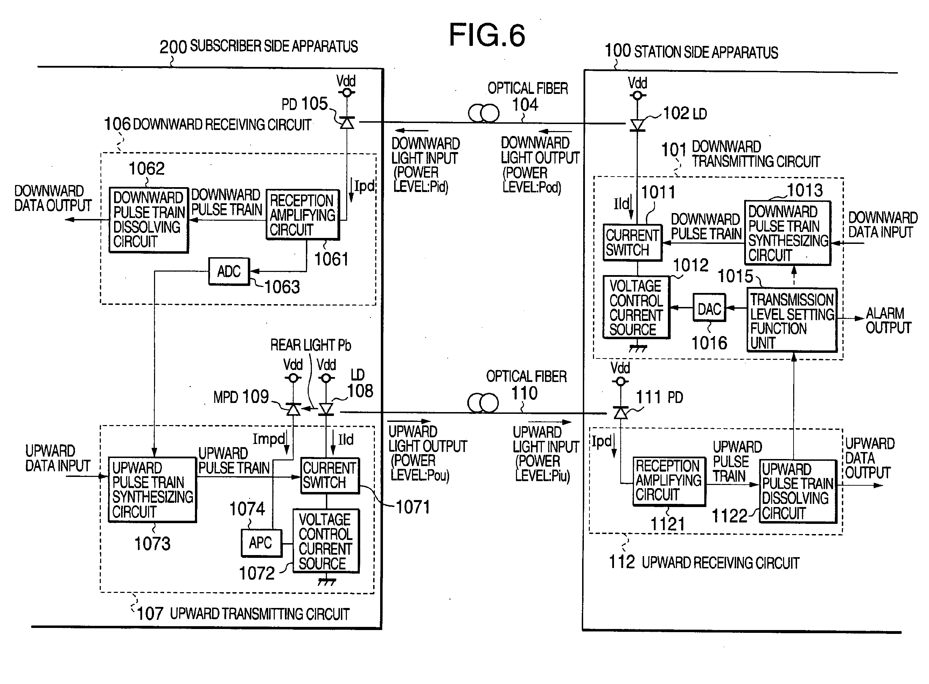

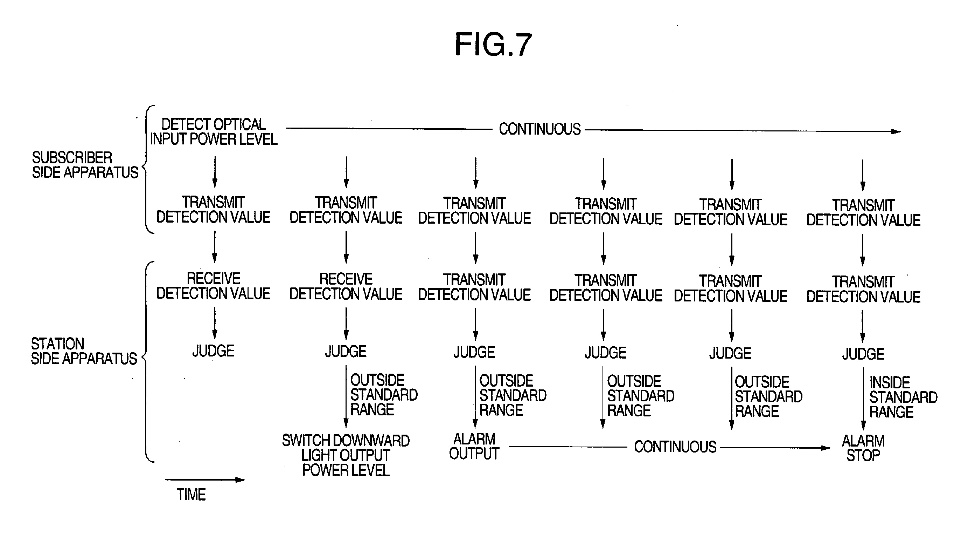

Fig. 6 shows a block diagram of an optically communicating system in fifth (and sixth) embodiments of the present invention. In Fig. 6, an alarm output is added to the transmission level setting function unit 1015 of the optically communicating system (Fig. 1) in the first to fourth embodiments. Fig. 7 is a view explaining the operation of the optically communicating system in the fifth embodiment of the present invention.

The fifth embodiment is the improvement of the optically communicating system in the first embodiment. In the station side apparatus 100, when the judged result of the detection value of the downward light input power level received from the subscriber side apparatus 200 becomes outside the predetermined range, even though the downward light output power level is switched, if a next judged result becomes again [Outside Predetermined Range], an alarm is outputted.

According to the fifth embodiment of the present invention as mentioned above, the station side apparatus 100 can judge whether or not the drop in the light input power level in the subscriber side apparatus 200 is caused by any trouble occurring in the downward light transmitting route (the optical fiber 104).

### <Sixth Embodiment>

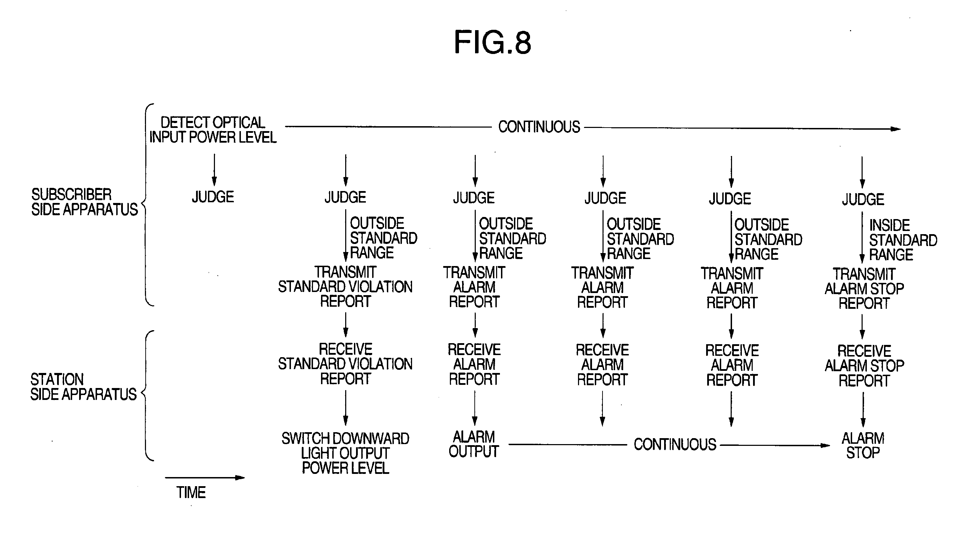

Fig. 8 is a view explaining the operation of the optically communicating system in the sixth embodiment of the present invention. The sixth embodiment is the improvement of the optically communicating system in the second embodiment. In the subscriber side apparatus 200, when the judged result of the detection value of the downward light input power level becomes [Outside Predetermined Range], even though [Standard Violation Report] is transmitted to the station side apparatus 100, if a next judged result becomes again [Outside Predetermined Range], an alarm is outputted.

According to the sixth embodiment of the present invention as mentioned above, similarly to the fifth embodiment, the station side apparatus 100 can judge whether or not the drop in the light input power level in the subscriber side apparatus 200 is caused by any trouble occurring in the downward light transmitting route (the optical fiber 104).

### <Seventh Embodiment>

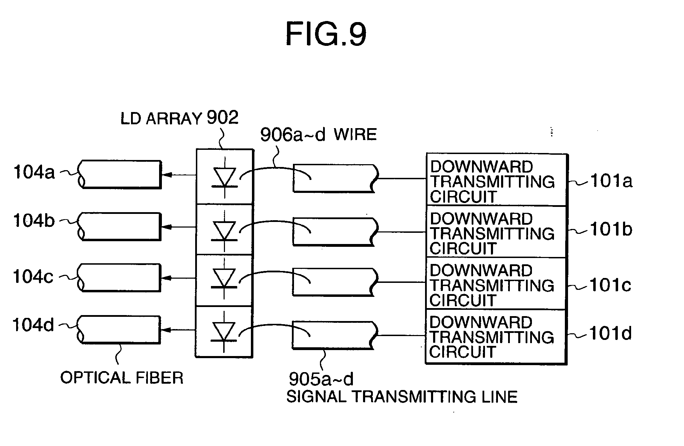

Next, Fig. 9 shows a block diagram of a part of an optically communicating system in a seventh embodiment of the present invention. The seventh embodiment of the present invention is the optically communicating system having the station side apparatus 100 that contains a plurality of subscriber side apparatuses 200 in the optically communicating system in the first to sixth embodiments. That feature lies in the usage of an LD array as a downward transmitting LD. Fig. 9 is a peripheral block diagram of the LD array. In Fig. 9, respective optical outputs of the LD array 902 are connected to optical fibers 104a, 104b, 104c and 104d. The LD array 902 is connected through wires 906a, 906b, 906c and 906d, and signal transmitting lines 905a, 905b, 905c and 905d to downward transmitting circuits 101a, 101b, 101c and 101d.

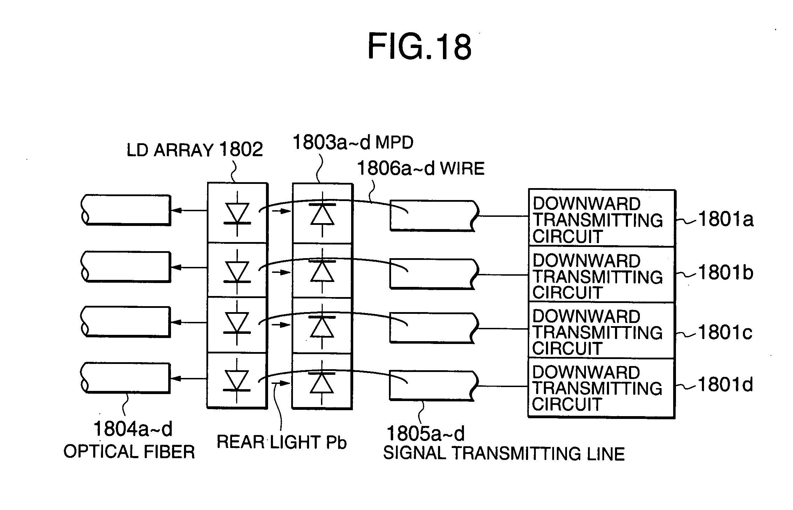

For the comparison, Fig. 18 shows a block diagram showing the periphery of the LD array when the MPD is required. In Fig. 18, since the wires 906a, 906b, 906c and 906d are wired while they are jumping over MPDs 1803a, 1803b, 1803c and 1803d, this has the problems that the long wire length brings about the deterioration in the property and that the wiring of the MPDs is very difficult. On the other hand, the seventh embodiment of the present invention shown in Fig. 9 does not require the MPD. Thus, it is possible to attain the miniaturization and the lower cost of the light module due to the application of the LD array 902.

### <Eighth Embodiment>

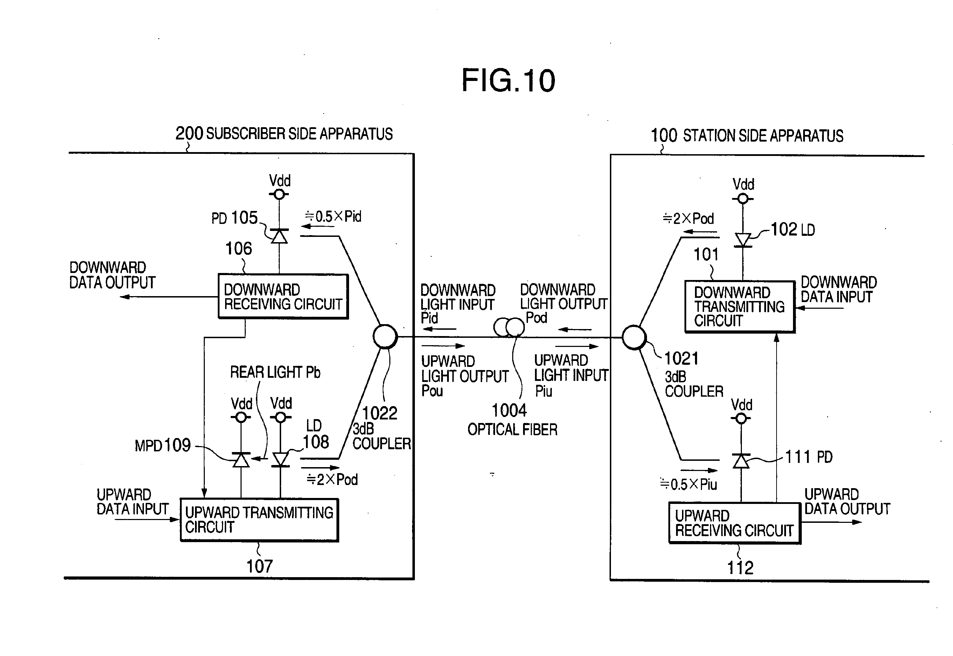

Next, Fig. 10 shows a block diagram of an optically communicating system in an eighth embodiment of the present invention. The eighth embodiment of the present invention is designed such that in the optically communicating system in the first to seventh embodiments, the downward optical signal and the upward optical signal are transmitted through a single optical fiber 1004 by using 3dB couplers 1021, 1022.

According to the eighth embodiment of the present invention as mentioned above, the downward optical signal and the upward optical signal are transmitted through the single optical fiber 1004. Thus, this has the following merits. That is, it is possible to reduce the total cost of the optically communicating system, and it is possible to know that the trouble occurring on the downward light transmitting line is not the trouble on the optical fiber if the alarm output is installed such as the fifth and sixth embodiments of the present invention.

### <Ninth Embodiment>

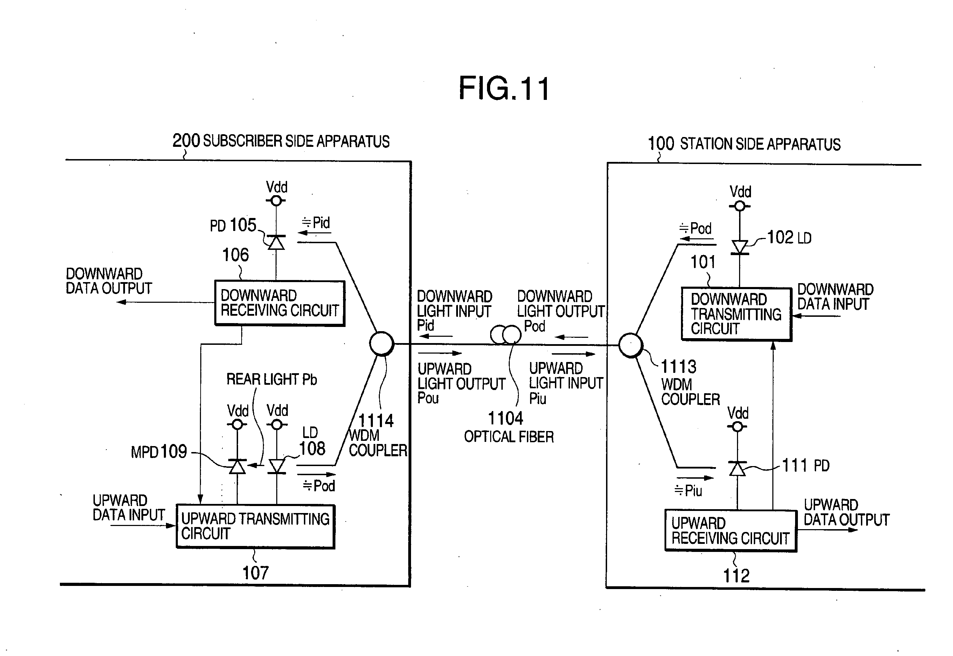

Next, Fig. 11 shows a block diagram of an optically communicating system in a ninth embodiment of the present invention. The ninth embodiment of the present invention is designed such that in the optically communicating system in the first to seventh embodiments, the downward optical signal and the upward optical signal are transmitted through a single optical fiber 1104 by using WDM couplers 1113, 1114.

According to the ninth embodiment of the present invention as mentioned above, similarly to the eighth embodiment of the present invention, the downward optical signal and the upward optical signal are transmitted through the single optical fiber 1104. Thus, this has the following merits. That is, it is possible to reduce the total cost of the optically communicating system, and it is possible to know that the trouble occurring on the downward light transmitting line is not the trouble on the optical fiber, if the alarm output is installed such as the fifth and sixth embodiments of the present invention. Moreover, the coupler loss is small as compared with the eighth embodiment of the present invention, and it is possible to relax the apparatus specification, such as the decrease in a transmission power, the increase in a reception power and the allowance of an optical fiber transmission loss.

### <Tenth Embodiment>

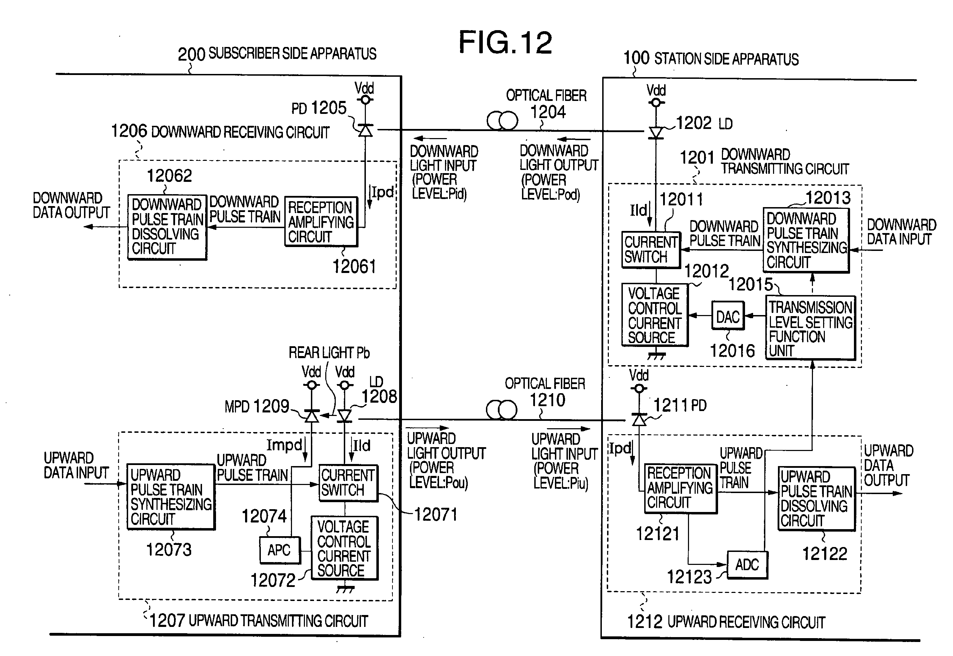

Fig. 12 shows an optically communicating system in a tenth embodiment of the present invention. In Fig. 12, a downward data to the subscriber side apparatus 200 from the station side apparatus 100 is transmitted by using an optical fiber 1204 as a medium, and an upward data to the station side apparatus 100 from the subscriber side apparatus 200 is transmitted by using an optical fiber 1210 as a medium.

The upward optical signal including the upward data transmitted from the subscriber side apparatus 200 is transmitted since an upward transmitting circuit 1207 sends a pulse driving current Ild to an LD 1208. The pulse driving current Ild is generated since a current switch 12071 switches a route, through which a current flowing into a voltage control current source 12072 flows, in accordance with a level = 1 or 0 of an upward pulse train. The upward pulse train includes the upward data, and it is generated by an upward pulse train synthesizing circuit 12073. An MPD 1209 receives a rear light Pb of the LD 1208. Then, a monitoring current Impd obtained by the optic-electric conversion is inputted to an automatic power control (APC) circuit 12074. The APC circuit 12074 adjusts a control voltage of the voltage control current source 12072 so that the monitoring current Impd is constant. Thus, an upward light output power level Pou is kept substantially constant.

After the upward optical signal including the upward data is passed through the optical fiber 1210, it is inputted to the station side apparatus 100. Then, a PD 1211 performs the optic-electric conversion on it. The optical current Ipd after the conversion is inputted to an upward receiving circuit 1212. The upward receiving circuit 1212 converts the optical current Ipd into a digital voltage signal, and further extracts and outputs only the upward data, and also detects an upper input power level, and converts the detected result into a digital data and outputs it. The upward receiving circuit 1212 has a reception amplifying circuit 12121, an upward pulse train dissolving circuit 12122 and an ADC 12123. The reception amplifying circuit 12121 converts the optical current Ipd into a digital voltage signal, and the upward pulse train is reproduced. The upward pulse train dissolving circuit 12122 extracts the upward data from the upward pulse train and outputs it. Also, the reception amplifying circuit 12121 detects the upward light input power level, and the detected result is converted into a digital data by the ADC 12123 and outputted.

The downward optical signal including the downward data transmitted from the station side apparatus 100 is transmitted since a downward transmitting circuit 1201 sends the pulse driving current Ild to an LD 1202. The pulse driving current Ild is generated since a current switch 12011 switches a route, through which a current flowing into a voltage control current source 12012 flows, in accordance with a level = 1 or 0 of a downward pulse train. The downward pulse train includes the downward data, and it is generated by a downward pulse train synthesizing circuit 12013. A control voltage of the voltage control current source 12012 is provided such that on the basis of the upward light input power level information inputted from the upward receiving circuit 1212, the loss of a light transmitting path is estimated by a transmission level setting function unit 12015, and a setting value is determined, and it is converted into a voltage by a DAC 12016.

After the downward optical signal including the downward data is passed through the optical fiber 1204, it is inputted to the subscriber side apparatus 200. Then, a PD 1205 performs the optic-electric conversion on it. An optical current Ipd after the conversion is inputted to a downward receiving circuit 1206. The downward receiving circuit 1206 converts the optical current Ipd into a digital voltage signal, and further extracts and outputs only the downward data, and also detects a downward input power level, and then converts the detected result into a digital data and outputs it. The downward receiving circuit 1206 has a reception amplifying circuit 12061 and a downward pulse train dissolving circuit 12062. The reception amplifying circuit 12061 converts the optical current Ipd into a digital voltage signal, and the downward pulse train is reproduced. The downward pulse train dissolving circuit 12062 extracts the downward data from the downward pulse train and outputs it.

According to the tenth embodiment of the present invention as mentioned above, on the basis of the upward light input power level information in the input of the station side apparatus 100, the loss of the light transmitting path is estimated to thereby change the downward light output power level of the station side apparatus 100. Consequently, even if the number of the MPDs in the station side apparatus 100 is reduced, the light input power of the subscriber side apparatus 200 can fall in the constant range. By the way, a signal line is connected from the transmission level setting function unit 12015 to the downward pulse train synthesizing circuit 12013. This is required in the fourteenth embodiment of the present invention, which will be described later

### <Eleventh Embodiment>

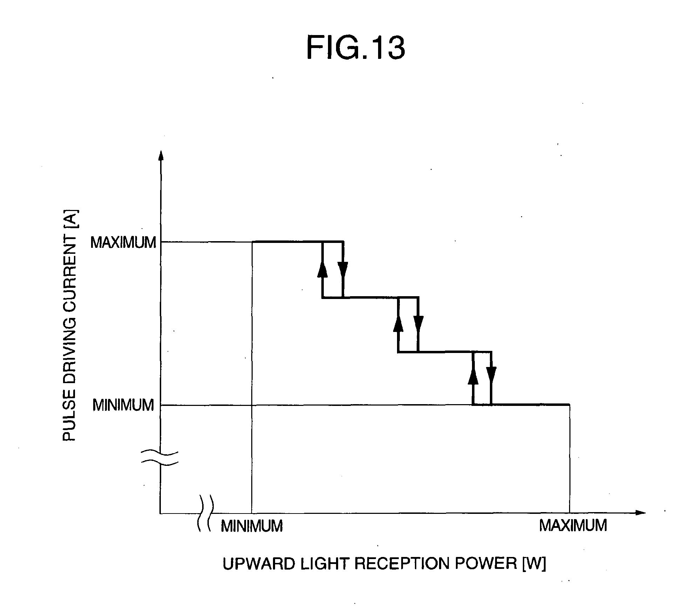

An eleventh embodiment of the present invention will be described below. The block configuration is similar to that of the tenth embodiment of the present invention, which is shown in Fig. 12. The eleventh embodiment of the present invention is designed such that when the downward light output power level is switched in stages on the basis of the upward light input power level, as shown in Fig. 13, a hysteresis property is given to a switching timing.

According to the eleventh embodiment of the present invention as mentioned above, even if the upward light input power level is close to the switching timing, it is possible to protect the downward light output power level from being frequently switched.

### <Twelfth Embodiment>

A twelfth embodiment of the present invention will be described below. The twelfth embodiment of the present invention is designed such that in the optically communicating system of the tenth and eleventh embodiments, the downward optical signal and the upward optical signal are transmitted through a single optical fiber by using a 3dB coupler.

According to the twelfth embodiment of the present invention as mentioned above, the downward optical signal and the upward optical signal are transmitted through the single optical fiber. Thus, this has the merit of protecting the variation in the downward light input power level in the subscriber side apparatus which is caused by the difference between the loss of the upward transmitting path and the loss of the downward transmitting path.

### <Thirteenth Embodiment>

A thirteenth embodiment of the present invention will be described below. The thirteenth embodiment of the present invention is designed such that in the optically communicating system of the tenth and eleventh embodiments, the downward optical signal and the upward optical signal are transmitted through a single optical fiber by using a WDM coupler.

According to the thirteenth embodiment of the present invention as mentioned above, the downward optical signal and the upward optical signal are transmitted through the single optical fiber. Thus, this has the merit of protecting the variation in the downward light input power level in the subscriber side apparatus which is caused by the difference between the loss of the upward transmitting path and the loss of the downward transmitting path. Moreover, it is possible to relax the apparatus specification, such as the decrease in the transmission power, the increase in the reception power and the allowance of the optical fiber transmission loss.

### <Fourteenth Embodiment>

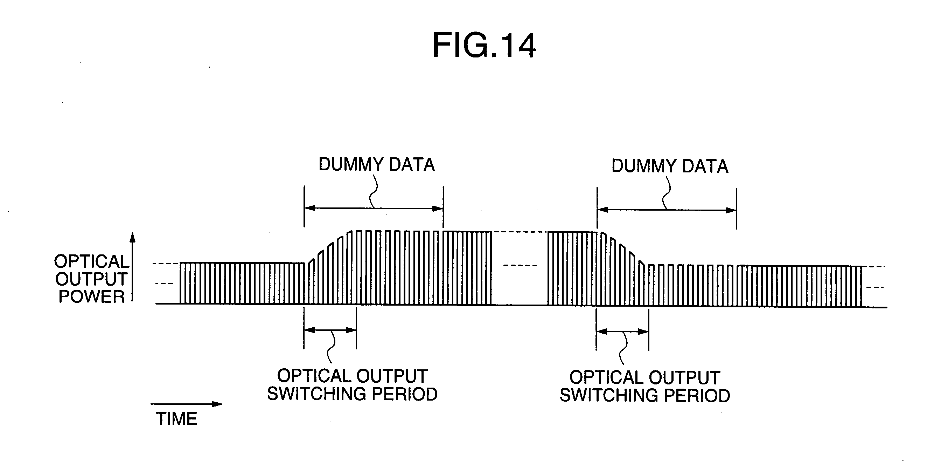

An optically communicating system in the fourteenth embodiment of the present invention will be described below with reference to Fig. 14. The fourteenth embodiment of the present invention is designed as follows. That is, when the downward light output power level is switched in stages, the transmission level setting function unit 12015 switches the downward output power level. Then, at least until the downward receiving circuit of the subscriber side apparatus 200 follows the variation in the downward light input power level, the downward pulse train synthesizing circuit 12013 inserts a dummy data into the downward signal.

According to the fourteenth embodiment of the present invention as mentioned above, switching the downward output power level can protect the necessary downward data from being erroneous.

### <Fifteenth Embodiment>

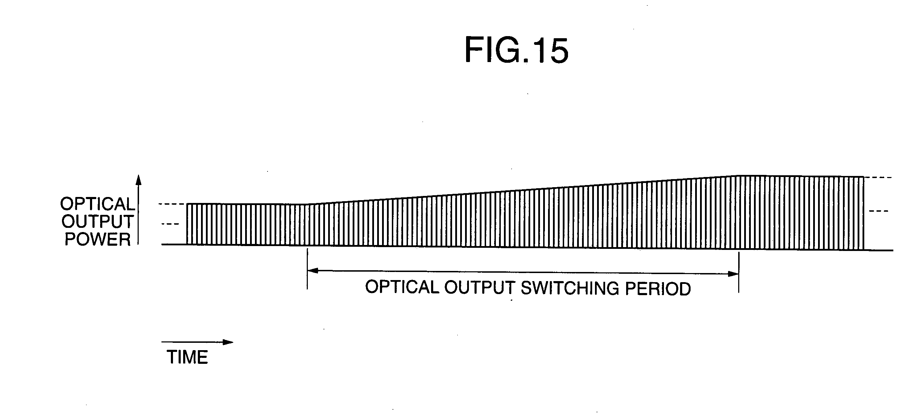

An optically communicating system in a fifteenth embodiment of the present invention will be described below with reference to Fig. 15. The fifteenth embodiment of the present invention is designed such that the transmission level setting function unit 12015, when changing the downward light output power level in stages, gradually changes the downward output power level and changes it.

According to the fifteenth embodiment of the present invention as mentioned above, this has the merits that switching the downward output power level can protect the necessary downward data from being erroneous and that the transient reduction in the transmission capacity of the downward data resulting from the switching is never induced.

### <Sixteenth Embodiment>

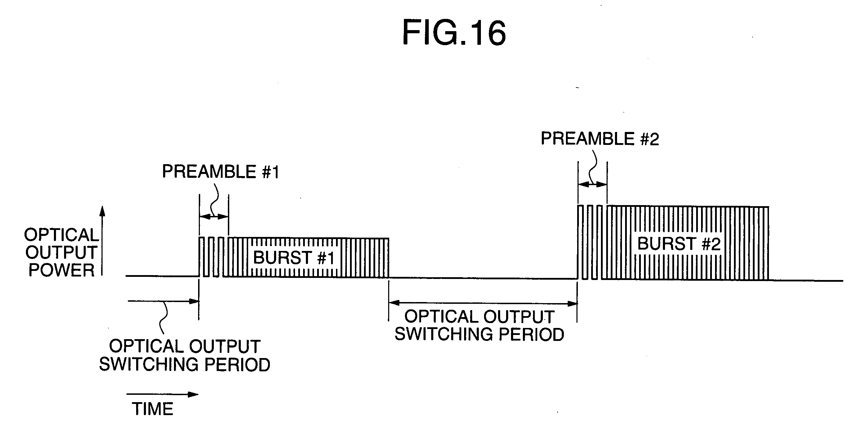

An optically communicating system in a sixteenth embodiment of the present invention will be described below with reference to Fig. 16. The sixteenth embodiment of the present invention is designed such that when the downward optical signal is a burst signal, an optical output is switched between the burst signals, and a preamble signal is added to a lead of the burst signal.

According to the sixteenth embodiment of the present invention as mentioned above, when the downward optical signal is the burst signal, switching the downward output power level can protect the necessary downward data from being erroneous.

### ADVANTAGEOUS EFFECTS OF THE INVENTION

As mentioned above, according to the inventions noted in claims 1, 2, 6, 7, 11, 16, 17 and 22, even if the number of the monitoring photodiodes in the station side apparatus is reduced, the optical input power of the subscriber side apparatus can fall in the constant range.

According to the inventions noted in claims 3, 8 and 18, even if the number of the monitoring photodiodes in the station side apparatus is reduced, the optical input power of the subscriber side apparatus can fall in the constant range. Also, it is possible to reduce the influence on the maximum transferring ability in the upward direction.

According to the inventions noted in claims 4, 9 and 19, even if the number of the monitoring photodiodes in the station side apparatus is reduced, the optical input power of the subscriber side apparatus can fall in the constant range. Also, even if the optical output of the station side apparatus is turned off, it is possible to control the optical output power of the station side apparatus without receiving that influence.

According to the invention noted in claim 5, after the power level of the downward light output signal is switched in accordance with the first standard range violation report, if it becomes outside the standard range, the station side apparatus can output the alarm to thereby judge the trouble on the downward light transmitting path.

According to the invention noted in claim 10, even if the number of the monitoring photodiodes in the station side apparatus is reduced, the optical input power of the subscriber side apparatus can fall in the constant range. Also, the station side apparatus can judge the trouble on the downward light transmitting path.

According to the invention noted in claim 12, even if the number of the monitoring photodiodes in the station side apparatus is reduced, the optical input power of the subscriber side apparatus can fall in the constant range. Also, it is possible to protect the power level of the downward light output signal to the subscriber side apparatus from being frequently changed.

According to the inventions noted in claims 13, 15, 24 and 26, it is possible to protect the downward signal from being erroneous when the power level of the downward light output signal is switched.

According to the inventions noted in claims 14 and 25, it is possible to protect the downward signal from being erroneous when the power level of the downward light output signal is switched. Also, it is possible to protect the transient drop in the transmission capacity of the downward signal.

According to the invention noted in claim 20, even if the number of the monitoring photodiodes in the station side apparatus is reduced, it is possible to reduce the variation width in the optical output power of the station side apparatus. Also, even if the optical output of the subscriber side apparatus is turned off, it is possible to control the optical output power of the station side apparatus.

According to the invention noted in claim 21, even if the number of the monitoring photodiodes in the station side apparatus is reduced, it is possible to reduce the variation width in the optical output power of the station side apparatus. Also, the side of the station side apparatus can judge the trouble on the downward light transmitting path.

According to the invention noted in claim 23, even if the number of the monitoring photodiodes in the station side apparatus is reduced, it is possible to reduce the variation width in the optical output power of the station side apparatus. Also, it is possible to protect the power level of the downward light output signal to the subscriber side apparatus from being frequently changed.

## Claims

1. A subscriber side apparatus in an optically communicating system for carrying out an optical communication in two ways between a station side apparatus and said subscriber side apparatus, comprising:
a unit for detecting a power level of a downward light input signal from said station side apparatus; and
a unit for transmitting a control information corresponding to that detection value to said station side apparatus.

2. The subscriber side apparatus according to claim 1, wherein the detection value of the power level in the downward light input signal is transmitted to said station side apparatus for each constant time interval.

3. The subscriber side apparatus according to claim 1, wherein whether or not the detection value of the power level in the downward light input signal is within a predetermined range is judged, and only if it is outside the predetermined range, that fact is transmitted to said station side apparatus.

4. The subscriber side apparatus according to claim 1, wherein whether or not the detection value of the power level in the downward light input signal is within the predetermined range is judged, and if a plurality of judged results are continuously outside the predetermined range, that fact is transmitted to said station side apparatus.

5. The subscriber side apparatus according to claim 3 or 4, wherein if a next judged result after a transmission of a standard range violation report is outside the predetermined range, that fact is transmitted to said station side apparatus.

6. A station side apparatus in an optically communicating system for carrying out an optical communication in two ways between said station side apparatus and a subscriber side apparatus,
wherein said subscriber side apparatus detects a power level of a downward light input signal from said station side apparatus and transmits a control information corresponding to that detection value to said station side apparatus, and
it includes a unit for controlling a power level of a downward light output signal to said subscriber side apparatus in accordance with said control information.

7. The station side apparatus according to claim 6,
wherein said control information is the detection value of the power level in the downward light input signal,
whether or not said detection value is within a predetermined range is judged, and
if it is outside the predetermined range, the power level of the downward light output signal is switched.

8. The station side apparatus according to claim 6,
wherein if said control information is a standard violation report indicating that the detection value of the power level of the downward light input signal is outside the predetermined range, and if said standard violation report is received, the power level of the downward light output signal is switched.

9. The station side apparatus according to claim 6,
wherein if said control information is the standard violation report indicating that the detection value of the power level of the downward light input signal is outside the predetermined range, and if a plurality of detection values are continuously outside the predetermined range, an output power level of the downward light output signal is switched.

10. The station side apparatus according to claim 8 or 9, wherein if a next judged result after the power level of the downward light output signal is switched becomes outside the predetermined range, an alarm is outputted.

11. A station side apparatus in an optically communicating system for carrying out an optical communication in two ways between said station side apparatus and a subscriber side apparatus,
wherein a power level of a downward light output signal to said subscriber side apparatus is controlled on the basis of a power level of an upward light output signal from said subscriber side apparatus.

12. The station side apparatus according to claim 11, wherein the power level of the downward light output signal to said subscriber side apparatus is switched in stages in accordance with a hysteresis property.

13. The station side apparatus according to claim 6, wherein after the power level of the downward light output signal to said subscriber side apparatus is switched, a dummy data is inserted into a downward data.

14. The station side apparatus according to claim 6, wherein the power level of the downward light output signal to said subscriber side apparatus is gradually changed.

15. The station side apparatus according to claim 6, wherein the downward light output signal to said subscriber side apparatus is a burst signal,
the power level of the downward light output signal is switched between said burst signals, and
a preamble signal is added to a lead of said burst signal.

16. An optically communicating system for carrying out an optical communication in two ways between a station side apparatus and a subscriber side apparatus,
wherein said subscriber side apparatus detects a power level of a downward light input signal from said station side apparatus and transmits a control information corresponding to that detection value to said station side apparatus, and
said station side apparatus controls a power level of a downward light output signal to said subscriber side apparatus in accordance with said control information.

17. The optically communicating system according to claim 16, wherein said subscriber side apparatus transmits the detection value of the power level of the downward light input signal to said station side apparatus for each constant time interval, and
said station side apparatus judges whether or not said detection value is within a predetermined range, and switches the power level of the downward light output signal if it is outside the predetermined range.

18. The optically communicating system according to claim 16, wherein said subscriber side apparatus judges whether or not the detection value of the power level of the downward light input signal is within the predetermined range, and only if it is outside the predetermined range, transmits that fact to said station side apparatus, and
said station side apparatus, if receiving said standard violation report, switches the power level of the downward light output signal.

19. The optically communicating system according to claim 16, wherein said subscriber side apparatus transmits the detection value of the power level of the downward light input signal for each constant time interval, and
said station side apparatus judges whether or not said detection value is within the predetermined range, and if a plurality of judged results are continuously outside the predetermined range, switches an output power level of the downward light output signal.

20. The optically communicating system according to claim 16, wherein said subscriber side apparatus judges whether or not the detection value of the power level of the downward light input signal is within the predetermined range, and if a plurality of judged results are continuously outside the predetermined range, transmits that fact to said station side apparatus, and
said station side apparatus, if receiving said standard violation report, switches the power level of the downward light output signal.

21. The optically communicating system according to claim 16, wherein said station side apparatus outputs an alarm, if a next judged result after the power level of the downward light output signal is changed becomes outside the predetermined range.

22. An optically communicating system for carrying out an optical communication in two ways between a station side apparatus and a subscriber side apparatus,
wherein said station side apparatus controls a power level of a downward light output signal to said subscriber side apparatus on the basis of a power level of an upward light output signal from said subscriber side apparatus.

23. The optically communicating system according to claim 22, wherein said station side apparatus switches the power level of the downward light output signal to said subscriber side apparatus in stages in accordance with a hysteresis property.

24. The optically communicating system according to claim 16, wherein said station side apparatus, after switching the power level of the downward light output signal to said subscriber side apparatus, inserts a dummy data into a downward data.

25. The optically communicating system according to claim 16, wherein said station side apparatus gradually changes the power level of the downward light output signal to said subscriber side apparatus.

26. The optically communicating system according to claim 16,
wherein the downward light output signal to said subscriber side apparatus is a burst signal,
said station side apparatus switches the power level of the downward light output signal between said burst signals, and adds a preamble signal to a lead of said burst signal.
